# EUROPEAN PATENT APPLICATION

(11) **EP 4 789 944 A1**
(43) Date of publication of application: **12.08.2026**
(21) Application number: 23954648.4
(22) Date of filing: 29.11.2023
(51) Int. Cl.: B61D 23/02

(54) **WORKING CIRCUIT AND CONTROL METHOD FOR RAILWAY VEHICLE EMERGENCY EVACUATION DEVICE**

(30) Priority: 07.10.2023 CN 202311287816
(71) Applicant: CRRC Changchun Railway Vehicles Co., Ltd., Changchun, Jilin 130000 (CN)
(72) Inventor: DUAN, Hongliang, Changchun, Jilin 130000 (CN); LI, Xuefei, Changchun, Jilin 130000 (CN); CHEN, Dongdong, Changchun, Jilin 130000 (CN); ZHONG, Bohao, Changchun, Jilin 130000 (CN)
(74) Representative: Vogelbruch, Keang
(86) International application number: PCT/CN2023/135159
(87) International publication number: WO 2025/073136

(57) **Abstract**

The present invention belongs to the technical field of railway vehicles. Provided are a working circuit and control method for a railway vehicle emergency evacuation device. A power supply unit in the working circuit provides a direct-current voltage to a vehicle zero-speed response unit; the vehicle zero-speed response unit outputs the direct-current voltage to an apron board interaction unit and a folding ladder telescopic interaction unit in response to a vehicle zero-speed signal; and the apron board interaction unit and the folding ladder telescopic interaction unit output a voltage to a door enabling response unit, and in conjunction with the selection for a first side or second side by door enabling signal input switches, the door enabling response unit outputs a voltage signal to a drive response unit to drive a gas cylinder electromagnetic valve to work. The control method for an emergency evacuation device according to the present invention is suitable for the working circuit for an emergency evacuation device according to the present invention. By means of the vehicle zero-speed response unit and door enabling response unit provided in the present invention, a control signal is provided to the driver side, enabling human-machine interaction to ensure that the device is opened on the correct side, thus guaranteeing the safety of the vehicle, rails, driver, and passengers.

## Description

### CROSS-REFERENCE TO RELATED APPLICATIONS

The present invention claims priority to Chinese Patent Application No. 2023112878162, filed with the China National Intellectual Property Administration on October 7, 2023, entitled "WORKING CIRCUIT AND CONTROL METHOD FOR RAIL VEHICLE EMERGENCY EVACUATION DEVICE" the entire contents of which are incorporated herein by reference.

### TECHNICAL FIELD

The present invention relates to the field of rail vehicle technology, and in particular, to a working circuit and control method for an emergency evacuation device of a rail vehicle.

### BACKGROUND

An emergency evacuation device is equipment provided on rail vehicles for evacuating vehicle occupants in emergency situations. When a rail vehicle encounters a condition during operation that necessitates an emergency stop, due to the relatively large distance between the rail vehicle and the ground, an emergency evacuation device needs to be deployed below the escape door after the escape door is opened, allowing occupants to escape from the vehicle to the ground through the emergency evacuation device in a timely manner.

Existing emergency evacuation devices are retractable emergency evacuation ladders arranged beneath the floor panel of the train, specifically disposed in a storage compartment below the door. During train operation, the emergency evacuation ladder may be accidentally deployed due to vibration or other incidents, causing vehicle equipment to encroach upon the railway limit and affecting railway safety. In addition, the deployment control strategy of existing emergency evacuation devices presents certain safety hazards, as the device is prone to accidental opening. If the emergency evacuation device is accidentally opened while the train is in motion, it will not only affect railway equipment safety and reduce passenger evacuation efficiency, but if the wrong escape door of the emergency evacuation device is opened, passengers may fall onto the track, increasing the risk of personal injury. Thus, the importance of controlling the emergency evacuation device is evident. Based on the foregoing reasons, there is a need to provide a method for controlling an emergency evacuation device to solve the problem of erroneous opening of existing emergency evacuation devices in emergency situations.

### SUMMARY

Based on the problems existing in the prior art, the present invention provides a working circuit and control method for an emergency evacuation device, which can fully ensure that the emergency evacuation device will not be accidentally opened, reduce encroachment upon vehicle equipment limits, and guarantee railway equipment safety.

In a first aspect, the present invention provides a working circuit for an emergency evacuation device of a rail vehicle, comprising:
a power supply unit, a vehicle zero-speed response unit, a skirt panel interactive unit, a folding ladder telescopic interactive unit, a door enable response unit, and a drive response unit;
the power supply unit is connected to the vehicle zero-speed response unit for providing a DC voltage to the vehicle zero-speed response unit;
the vehicle zero-speed response unit is connected to the skirt panel interactive unit and the folding ladder telescopic interactive unit for outputting a DC voltage to the skirt panel interactive unit and the folding ladder telescopic interactive unit in response to a vehicle zero-speed signal;
the skirt panel interactive unit comprises a skirt panel deployment button or a skirt panel retraction button for outputting a first voltage to the door enable response unit in response to conduction of the skirt panel deployment button, and outputting a second voltage to the door enable response unit in response to conduction of the skirt panel retraction button;
the folding ladder telescopic interactive unit comprises a ladder deployment button or a ladder retraction button for outputting a third voltage to the door enable response unit in response to conduction of the ladder deployment button, and outputting a fourth voltage to the door enable response unit in response to conduction of the ladder retraction button;
the input terminal of the door enable response unit is connected to the skirt panel interactive unit and the folding ladder telescopic interactive unit, and the output terminal of the door enable response unit is connected to the drive response unit; the door enable response unit comprises a door enable signal input switch; the drive response unit comprises a cylinder solenoid valve;
the door enable response unit is configured to receive the first voltage, the second voltage, the third voltage, or the fourth voltage, and in combination with a one side or a two side selected by the door enable signal input switch, output a voltage signal to the drive response unit to drive the cylinder solenoid valve to operate.

Further, the vehicle zero-speed response unit comprises a vehicle zero-speed signal input terminal, a first input terminal, and a first output terminal. The vehicle zero-speed response unit is configured to output the DC voltage input from the first input terminal to the first output terminal in response to the vehicle zero-speed signal input from the vehicle zero-speed signal input terminal; the power supply unit is connected to the first input terminal of the vehicle zero-speed response unit for providing a DC voltage to the first input terminal of the vehicle zero-speed response unit.

Further, the skirt panel interactive unit comprises a first voltage input terminal, a first voltage output terminal, and a second voltage output terminal; the folding ladder telescopic interactive unit comprises a second voltage input terminal, a third voltage output terminal, and a fourth voltage output terminal;
the first output terminal of the vehicle zero-speed response unit is connected to the first voltage input terminal of the skirt panel interactive unit and the second voltage input terminal of the folding ladder telescopic interactive unit; the first voltage output terminals, the second voltage output terminals, the third voltage output terminals, and the fourth voltage output terminals of the skirt panel interactive unit and the folding ladder telescopic interactive unit are all connected to the door enable response unit.

Further, the door enable response unit comprises a first door enable signal input switch, a second door enable signal input switch, a third door enable signal input switch, a fourth door enable signal input switch, a first signal input terminal, a second signal input terminal, a third signal input terminal, a fourth signal input terminal, a first signal output terminal, a second signal output terminal, a third signal output terminal, a fourth signal output terminal, a fifth signal output terminal, a sixth signal output terminal, a seventh signal output terminal, and an eighth signal output terminal;
the door enable response unit, in response to the first door enable signal input switch conducting on the one side, outputs the voltage signal output from the first signal input terminal to the first signal output terminal; in response to the first door enable signal input switch conducting on the two side, outputs the voltage signal output from the first signal input terminal to the second signal output terminal; in response to the second door enable signal input switch conducting on the one side, outputs the voltage signal output from the second signal input terminal to the third signal output terminal; in response to the second door enable signal input switch conducting on the two side, outputs the voltage signal output from the second signal input terminal to the fourth signal output terminal; in response to the third door enable signal input switch conducting on the one side, outputs the voltage signal output from the third signal input terminal to the fifth signal output terminal; in response to the third door enable signal input switch conducting on the two side, outputs the voltage signal output from the third signal input terminal to the sixth signal output terminal; in response to the fourth door enable signal input switch conducting on the one side, outputs the voltage signal output from the fourth signal input terminal to the seventh signal output terminal; in response to the fourth door enable signal input switch conducting on the two side, outputs the voltage signal output from the fourth signal input terminal to the eighth signal output terminal.

Further, the drive response unit comprises a one side skirt panel opening cylinder solenoid valve, a two side skirt panel opening cylinder solenoid valve, a one side skirt panel retraction cylinder solenoid valve, a two side skirt panel retraction cylinder solenoid valve, a one side ladder deployment cylinder solenoid valve, a two side ladder deployment cylinder solenoid valve, a one side ladder retraction cylinder solenoid valve, and a two side ladder retraction cylinder solenoid valve; and
the first signal output terminal is connected to the one side skirt panel opening cylinder solenoid valve, the second signal output terminal is connected to the two side skirt panel opening cylinder solenoid valve, the third signal output terminal is connected to the one side skirt panel retraction cylinder solenoid valve, the fourth signal output terminal is connected to the two side skirt panel retraction cylinder solenoid valve, the fifth signal output terminal is connected to the one side ladder deployment cylinder solenoid valve, the sixth signal output terminal is connected to the two side ladder deployment cylinder solenoid valve, the seventh signal output terminal is connected to the one side ladder retraction cylinder solenoid valve, and the eighth signal output terminal is connected to the two side ladder retraction cylinder solenoid valve.

Further, the working circuit further comprises a skirt panel monitoring unit. The power supply unit is connected to the skirt panel monitoring unit for providing a DC voltage to the skirt panel monitoring unit; and the skirt panel monitoring unit is configured to detect skirt panel opening, and in response to skirt panel opening, supply power to an emergency unit and output a skirt panel open signal.

Further, the skirt panel monitoring unit comprises a one side skirt panel monitoring unit and a two side skirt panel monitoring unit;
the one side skirt panel monitoring unit comprises a first skirt panel monitoring input terminal, a first skirt panel monitoring output terminal, a second skirt panel monitoring output terminal, and a one side skirt panel monitoring switch; the first skirt panel monitoring input terminal is connected to the one side skirt panel monitoring switch, the one side skirt panel monitoring switch is a double-contact switch comprising a normally closed contact and a normally open contact, the normally closed contact is connected to the first skirt panel monitoring output terminal, and the first skirt panel monitoring output terminal is configured to output a skirt panel open signal; the normally open contact is connected to the second skirt panel monitoring output terminal, and the second skirt panel monitoring output terminal is connected to the emergency unit for supplying power to the emergency unit; and
the two side skirt panel monitoring unit comprises a second skirt panel monitoring input terminal, a third skirt panel monitoring output terminal, a fourth skirt panel monitoring output terminal, and a two side skirt panel monitoring switch; the second skirt panel monitoring input terminal is connected to the two side skirt panel monitoring switch, the two side skirt panel monitoring switch is a double-contact switch comprising a normally closed contact and a normally open contact, the normally closed contact is connected to the third skirt panel monitoring output terminal, and the third skirt panel monitoring output terminal is configured to output a skirt panel open signal; the normally open contact is connected to the fourth skirt panel monitoring output terminal, and the fourth skirt panel monitoring output terminal is connected to the emergency unit for supplying power to the emergency unit.

Further, the working circuit further comprises a slide way monitoring unit. The power supply unit is connected to the slide way monitoring unit for providing a DC voltage to the slide way monitoring unit; the slide way monitoring unit is configured to detect slide way opening and output a slide way open signal in response to the slide way opening.

Further, the slide way monitoring unit comprises a one side slide way monitoring unit and a two side slide way monitoring unit;
the one side slide way monitoring unit comprises a first slide way monitoring input terminal, a first slide way monitoring output terminal, and a one side slide way monitoring switch; one end of the one side slide way monitoring switch is connected to the first slide way monitoring input terminal, and the other end is connected to the first slide way monitoring output terminal; and
the two side slide way monitoring unit comprises a second slide way monitoring input terminal, a second slide way monitoring output terminal, and a two side slide way monitoring switch; one end of the two side slide way monitoring switch is connected to the second slide way monitoring input terminal, and the other end is connected to the second slide way monitoring output terminal.

In a second aspect, the present invention further provides a control method for an emergency evacuation device of a rail vehicle, for use with the working circuit of the emergency evacuation device described above. The control method comprises the following steps:
(1) obtaining a vehicle zero-speed signal, wherein a vehicle zero-speed response unit outputs a DC voltage input from a first input terminal through a first output terminal to a first voltage input terminal of a skirt panel interactive unit in response to the vehicle zero-speed signal; outputting, by the skirt panel interactive unit, the first voltage to the first signal input terminal of the door enable response unit in response to conduction of a skirt panel deployment button; in response to the door enable signal input switch selecting the one side or the two side, outputting a voltage signal from a first signal output terminal or a second signal output terminal to a drive response unit, so as to drive the one side or two side skirt panel opening cylinder solenoid valves for operating, and opening the one side or two side skirt panels;
(2) outputting, in response to the vehicle zero-speed signal, the DC voltage input from the first input terminal through the first output terminal to the second voltage input terminal of a folding ladder telescopic interactive unit; in response to conduction of a ladder deployment button, outputting, by the folding ladder telescopic interactive unit, a third voltage to a third signal input terminal of the door enable response unit; in response to the third door enable signal input switch selecting the one side or the two side, outputting the voltage signal from a fifth signal output terminal or a sixth signal output terminal to the drive response unit, so as to drive the one side or two side ladder opening cylinder solenoid valves for operating, and extending and opening the one side or two side folding ladders;
(3) outputting, by the folding ladder telescopic interactive unit, the fourth voltage to the fourth signal input terminal of the door enable response unit in response to conduction of the ladder retraction button; in response to the fourth door enable signal input switch selecting the one side or the two side, outputting the voltage signal from the seventh signal output terminal or the eighth signal output terminal to the drive response unit, so as to drive the one side or two side ladder retraction cylinder solenoid valves for operating, and folding and retracting the one side or two side folding ladders; and
(4) outputting, by the skirt panel interactive unit, the second voltage to the second signal input terminal of the door enable response unit in response to conduction of the skirt panel retraction button; in response to the second door enable signal input switch selecting the one side or the two side, outputting the voltage signal from the third signal output terminal or the fourth signal output terminal to the drive response unit, so as to drive the one side or two side skirt panel retraction cylinder solenoid valves to operate, and retracting the one side or two side skirt panels.

Compared with the prior art, the beneficial technical effects of the present invention are:
(1) the present invention sets buttons on the driver's console or on the device itself to realize one-touch operation for deploying and retracting the emergency evacuation device, greatly improving operational flexibility and intelligence;
(2) the present invention is provided with a skirt panel monitoring switch and a slide way monitoring switch. When the skirt panel is opened, the skirt panel monitoring switch is triggered and sends a prompt to the human machine interface (HMI) display screen for the driver. The driver can take corresponding actions based on the prompts on the display screen. This human-machine interactive approach can fully ensure that the emergency evacuation device will not be accidentally opened, will not cause vehicle equipment to encroach upon limits, and has minimal impact on railway equipment;
(3) to ensure the safety of electrically controlled opening, the present invention incorporates a zero-speed signal into the control circuit. Only when the rail vehicle is in a stopped state and the zero-speed signal is valid, and the deployment or retraction button of the device is pressed, will the emergency evacuation device operate;
(4) to further ensure safety and prevent erroneous opening of equipment on the side where no emergency evacuation device is installed, the present invention incorporates a door enable signal into the control circuit. Only when the side corresponding to the door that can be exited is activated will the device be energized to operate;
(5) after the skirt panel is opened in the present invention, the skirt panel monitoring switch is conductive with the emergency circuit, allowing the emergency lighting to provide good visibility for evacuating passengers in environments with insufficient lighting in tunnels;
(6) the control circuit of the present invention uses only relays and limit switches for controlling the opening and closing of corresponding circuits, simplifying the topological structure of the control circuit and reducing the cost of the control system of the present invention. The control method of the present invention also effectively ensures the accuracy of emergency evacuation device opening.

### BRIEF DESCRIPTION OF THE DRAWINGS

In order to more clearly illustrate the technical solutions of the embodiments of the present invention, a brief introduction to the drawings required for describing the embodiments is provided below. It should be understood that the following drawings merely show certain embodiments of the present invention and therefore should not be considered as limiting the scope. For those of ordinary skill in the art, other related drawings may be obtained based on these drawings without inventive effort.
FIG. 1 is a structural block diagram of the emergency evacuation device of the present invention;
FIG. 2 is a working circuit diagram of the emergency evacuation device of the present invention.

Reference Numerals: 10-power supply unit; 20-vehicle zero-speed response unit; 201-first input terminal; 202-first output terminal; 203-vehicle zero-speed signal input terminal; 30-skirt panel interactive unit; 301-skirt panel deployment button; 302-skirt panel retraction button; 310-first voltage input terminal; 311-first voltage output terminal; 312-second voltage output terminal; 31-first voltage; 32-second voltage; 40-folding ladder telescopic interactive unit; 401-ladder deployment button; 402-ladder retraction button; 410-second voltage input terminal; 411-third voltage output terminal; 412-fourth voltage output terminal; 41-third voltage; 42-fourth voltage; 50-door enable response unit; 51-first door enable signal input switch; 52-second door enable signal input switch; 53-third door enable signal input switch; 54-fourth door enable signal input switch; 501-first signal input terminal; 5011-first signal output terminal; 5012-second signal output terminal; 502-second signal input terminal; 5021-third signal output terminal; 5022-fourth signal output terminal; 503-third signal input terminal; 5031-fifth signal output terminal; 5032-sixth signal output terminal; 504-fourth signal input terminal; 5041-seventh signal output terminal; 5042-eighth signal output terminal; 60-drive response unit; 611-one side skirt panel opening cylinder solenoid valve; 612-two side skirt panel opening cylinder solenoid valve; 621-one side skirt panel retraction cylinder solenoid valve; 622-two side skirt panel retraction cylinder solenoid valve; 631-one side ladder deployment cylinder solenoid valve; 632-two side ladder deployment cylinder solenoid valve; 641-one side ladder retraction cylinder solenoid valve; 642-two side ladder retraction cylinder solenoid valve; 70-skirt panel monitoring unit; 701-one side skirt panel monitoring unit; 702-two side skirt panel monitoring unit; 71-one side skirt panel monitoring switch; 72-two side skirt panel monitoring switch; 710-first skirt panel monitoring input terminal; 71 1-first skirt panel monitoring output terminal; 712-second skirt panel monitoring output terminal; 720-second skirt panel monitoring input terminal; 721-third skirt panel monitoring output terminal; 722-fourth skirt panel monitoring output terminal; 80-emergency unit; 81-one side emergency unit; 82-two side emergency unit; 90-slide way monitoring unit; 901-one side slide way monitoring unit; 902-two side slide way monitoring unit; 91-one side slide way monitoring switch; 92-two side slide way monitoring switch; 910-first slide way monitoring input terminal; 911-first slide way monitoring output terminal; 912-second slide way monitoring output terminal; 920-second slide way monitoring input terminal; 921-third slide way monitoring output terminal; 922-fourth slide way monitoring output terminal; K-vehicle zero-speed signal; T1-one side skirt panel open signal; T2-two side skirt panel open signal; T3-one side slide way open signal; T4-two side slide way open signal; L1-one side first emergency light; L2-one side second emergency light; L3-two side first emergency light; L4-two side second emergency light.

### DETAILED DESCRIPTION OF THE EMBODIMENTS

The technical solutions of the embodiments of the present invention will be clearly and completely described below in conjunction with the drawings in the embodiments of the present invention. Obviously, the described embodiments are merely a part of the embodiments of the present invention, rather than all of the embodiments. All other embodiments obtained by those of ordinary skill in the art based on the embodiments of the present invention without inventive effort shall fall within the protection scope of the present invention.

It should be noted that the terms used herein are merely for describing specific embodiments and are not intended to limit the exemplary embodiments of the present invention. As used herein, unless the context clearly indicates otherwise, the singular form is also intended to include the plural form. Furthermore, it should also be understood that when the terms "comprise" and/or "comprising" are used in this description, they specify the presence of stated features, steps, operations, devices, components, and/or combinations thereof.

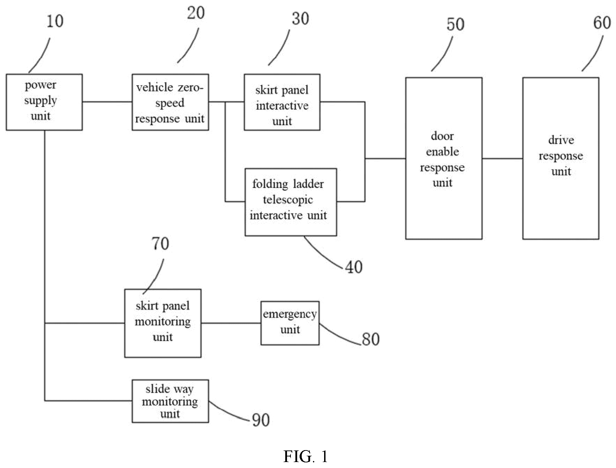

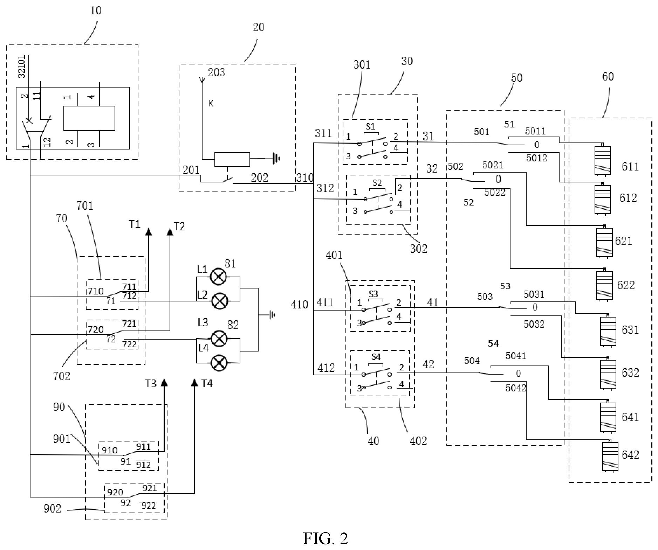

The present invention provides a control circuit for an emergency evacuation device. As shown in FIGS. 1-2, the control circuit comprises a power supply unit 10, a vehicle zero-speed response unit 20, a skirt panel interactive unit 30, a folding ladder telescopic interactive unit 40, a door enable response unit 50, and a drive response unit 60. The power supply unit 10 is connected to a first input terminal of the vehicle zero-speed response unit 20 for providing a DC voltage to the vehicle zero-speed response unit. In this embodiment, the power supply unit 10 comprises a relay. Using a relay greatly simplifies the circuit and reduces the cost of the working circuit. The vehicle zero-speed response unit 20 comprises a first input terminal 201, a first output terminal 202, and a vehicle zero-speed signal input terminal 203. The vehicle zero-speed response unit 20 is configured to output the DC voltage input from the first input terminal 201 to the first output terminal 202 in response to the vehicle zero-speed signal K input from the vehicle zero-speed signal input terminal 203. The power supply unit 10 is connected to the first input terminal 201 of the vehicle zero-speed response unit for providing a DC voltage to the first input terminal 201 of the vehicle zero-speed response unit 20. The vehicle zero-speed response unit 20 is specifically a vehicle zero-speed relay, which is a common mechanical system detection and protection device. The present invention adopts a zero-speed relay combined with an electrical control circuit. When the zero-speed signal is valid, the emergency evacuation device is controlled to operate, providing safety protection for vehicle operation and emergency evacuation device operation.

The output terminal of the vehicle zero-speed response unit 20 is connected to the skirt panel interactive unit 30 and the folding ladder telescopic interactive unit 40 for outputting a DC voltage to the skirt panel interactive unit 30 and the folding ladder telescopic interactive unit 40 in response to the vehicle zero-speed signal K. Specifically, the skirt panel interactive unit 30 comprises a first voltage input terminal 310, a first voltage output terminal 311, and a second voltage output terminal 312. The skirt panel interactive unit 30 comprises a skirt panel deployment button 301 and a skirt panel retraction button 302 for outputting a first voltage 31 to the door enable response unit 50 in response to the skirt panel deployment button 301, and outputting a second voltage 32 to the door enable response unit 50 in response to conduction of the skirt panel retraction button 302.

The folding ladder telescopic interactive unit 40 comprises a second voltage input terminal 410, a third voltage output terminal 411, and a fourth voltage output terminal 412. The folding ladder telescopic interactive unit 40 comprises a ladder deployment button 401 or a ladder retraction button 402 for outputting a third voltage 41 to the door enable response unit 50 in response to conduction of the ladder deployment button 401, and outputting a fourth voltage to the door enable response unit 50 in response to conduction of the ladder retraction button 402.

In the above process, the first output terminal 202 of the vehicle zero-speed response unit is connected to the first voltage input terminal 310 of the skirt panel interactive unit 30 and the second voltage input terminal 410 of the folding ladder telescopic interactive unit 40. The first voltage output terminals, the second voltage output terminals, the third voltage output terminals, and the fourth voltage output terminals of the skirt panel interactive unit 30 and the folding ladder telescopic interactive unit 40 are all connected to the door enable response unit, respectively outputting the first voltage 31, the second voltage 32, the third voltage 41, and the fourth voltage 42.

The input terminal of the door enable response unit 50 is connected to the output terminals of the skirt panel interactive unit 30 and the folding ladder telescopic interactive unit 40, and the output terminal of the door enable response unit 50 is connected to the input terminal of the drive response unit 60. The door enable response unit 50 comprises door enable signal input switches, specifically including a first door enable signal input switch 51, a second door enable signal input switch 52, a third door enable signal input switch 53, and a fourth door enable signal input switch 54, corresponding to a first signal input terminal 501, a second signal input terminal 502, a third signal input terminal 503, and a fourth signal input terminal 504, respectively. The first door enable signal input switch 51, the second door enable signal input switch 52, the third door enable signal input switch 53, and the fourth door enable signal input switch 54 are all three-contact switches having a first one side, a second two side, and a reset side for selecting the one side or the two side. The first door enable signal input switch 51 has a first signal output terminal 5011 and a second signal output terminal 5012. The second door enable signal input switch 52 has a third signal output terminal 5021 and a fourth signal output terminal 5022. The third door enable signal input switch 53 has a fifth signal output terminal 5031 and a sixth signal output terminal 5032. The fourth door enable signal input switch 54 has a seventh signal output terminal 5041 and an eighth signal output terminal 5042. The door enable response unit 50 outputs a total of 8 output signals to control the cylinder solenoid valves on the one side and the two side to operate.

The door enable response unit 50, in response to the first door enable signal input switch 51 conducting on the one side, outputs the voltage signal output from the first signal input terminal 501 to the first signal output terminal 5011. In response to the first door enable signal input switch 51 conducting on the two side, the door enable response unit 50 outputs the voltage signal output from the first signal input terminal 501 to the second signal output terminal 5012. In response to the second door enable signal input switch 52 conducting on the one side, the door enable response unit 50 outputs the voltage signal output from the second signal input terminal 502 to the third signal output terminal 5021. In response to the second door enable signal input switch 52 conducting on the two side, the door enable response unit 50 outputs the voltage signal output from the second signal input terminal 502 to the fourth signal output terminal 5022. In response to the third door enable signal input switch 53 conducting on the one side, the door enable response unit 50 outputs the voltage signal output from the third signal input terminal 503 to the fifth signal output terminal 5031. In response to the third door enable signal input switch 53 conducting on the two side, the door enable response unit 50 outputs the voltage signal output from the third signal input terminal 503 to the sixth signal output terminal 5032. In response to the fourth door enable signal input switch 54 conducting on the one side, the door enable response unit 50 outputs the voltage signal output from the fourth signal input terminal 504 to the seventh signal output terminal 5041. In response to the fourth door enable signal input switch 54 conducting on the two side, the door enable response unit 50 outputs the voltage signal output from the fourth signal input terminal 504 to the eighth signal output terminal 5042.

In this embodiment, the door enable response unit 50 is configured to receive the first voltage 31, the second voltage 32, the third voltage 41, or the fourth voltage 42 output from the skirt panel interactive unit 30 and the folding ladder telescopic interactive unit 40, and in combination with the one side or the two side selected by the first door enable signal input switch 51, the second door enable signal input switch 52, the third door enable signal input switch 53, and the fourth door enable signal input switch 54, output a voltage signal to the drive response unit 60 to drive the cylinder solenoid valve to operate. The door enable response unit provides a door enable signal, and only the device on the side that receives this signal can be activated, preventing erroneous opening of equipment on the side where no evacuation device is installed, further ensuring safety.

In this embodiment, the drive response unit 60 comprises a one side skirt panel opening cylinder solenoid valve 611, a two side skirt panel opening cylinder solenoid valve 612, a one side skirt panel retraction cylinder solenoid valve 621, a two side skirt panel retraction cylinder solenoid valve 622, a one side ladder deployment cylinder solenoid valve 631, a two side ladder deployment cylinder solenoid valve 632, a one side ladder retraction cylinder solenoid valve 641, and a two side ladder retraction cylinder solenoid valve 642. The first signal output terminal 5011 is connected to the one side skirt panel opening cylinder solenoid valve 611. The second signal output terminal 5012 is connected to the two side skirt panel opening cylinder solenoid valve 612. The third signal output terminal 5021 is connected to the one side skirt panel retraction cylinder solenoid valve 621. The fourth signal output terminal 5022 is connected to the two side skirt panel retraction cylinder solenoid valve 622. The fifth signal output terminal 5031 is connected to the one side ladder deployment cylinder solenoid valve 631. The sixth signal output terminal 5032 is connected to the two side ladder deployment cylinder solenoid valve 632. The seventh signal output terminal 5041 is connected to the one side ladder retraction cylinder solenoid valve 641. The eighth signal output terminal 5042 is connected to the two side ladder retraction cylinder solenoid valve 642.

The cylinder solenoid valve of this embodiment has an inflation port and an exhaust port. Taking the skirt panel as an example, the cylinder solenoid valve of the skirt panel has an inflation port and an exhaust port, which are controlled by solenoid valves respectively. One solenoid valve controls the on/off of the inflation port of the cylinder, and the other solenoid valve controls the on/off of the exhaust port of the cylinder. When the skirt panel is opened, the inflation port solenoid valve is energized, causing the inflation port of the cylinder to inflate, and the skirt panel extends out of the vehicle body. When the skirt panel is retracted, the exhaust port solenoid valve is energized, causing the exhaust port of the cylinder to exhaust, and the skirt panel is retracted.

The emergency evacuation device of this embodiment further comprises a skirt panel monitoring unit 70. The output terminal of the power supply unit 10 is connected to the input terminal of the skirt panel monitoring unit 70 for providing a DC voltage to the skirt panel monitoring unit 70. The skirt panel monitoring unit 70 is configured to detect skirt panel opening, and in response to skirt panel opening, supply power to an emergency unit 80 and output a one side skirt panel open signal T1 or a two side skirt panel open signal T2.

The skirt panel monitoring unit 70 comprises a one side skirt panel monitoring unit 701 and a two side skirt panel monitoring unit 702.

The one side skirt panel monitoring unit 701 comprises a first skirt panel monitoring input terminal 710, a first skirt panel monitoring output terminal 711, a second skirt panel monitoring output terminal 712, and a one side skirt panel monitoring switch 71. The first skirt panel monitoring input terminal 710 is connected to the one side skirt panel monitoring switch 71. The one side skirt panel monitoring switch 71 is a double-contact switch comprising a normally closed contact and a normally open contact. The normally closed contact is connected to the first skirt panel monitoring output terminal 711, and the first skirt panel monitoring output terminal 711 is configured to output a one side skirt panel open signal T1. The normally open contact is connected to the second skirt panel monitoring output terminal 712, and the second skirt panel monitoring output terminal 712 is connected to the one side emergency unit 81 for supplying power to the one side emergency unit 81. When the one side skirt panel open signal T1 is a high-level signal, the emergency unit is not illuminated. When the one side skirt panel open signal T1 is a low-level signal, the emergency unit is illuminated, providing a good lighting environment for the evacuation channel of occupants. The one side emergency unit 81 comprises a one side first emergency light L1 and a one side second emergency light L2.

The two side skirt panel monitoring unit 702 comprises a second skirt panel monitoring input terminal 720, a third skirt panel monitoring output terminal 721, a fourth skirt panel monitoring output terminal 722, and a two side skirt panel monitoring switch 72. The second skirt panel monitoring input terminal 720 is connected to the two side skirt panel monitoring switch 72. The two side skirt panel monitoring switch 72 is a double-contact switch comprising a normally closed contact and a normally open contact. The normally closed contact is connected to the third skirt panel monitoring output terminal 721, and the third skirt panel monitoring output terminal 721 is configured to output a two side skirt panel open signal T2. The normally open contact is connected to the fourth skirt panel monitoring output terminal 722, and the fourth skirt panel monitoring output terminal 722 is connected to the two side emergency unit 82 for supplying power to the two side emergency unit 82. The two side emergency unit 82 comprises a two side first emergency light L3 and a two side second emergency light L4.

The emergency evacuation device of this embodiment further comprises a slide way monitoring unit 90. The output terminal of the power supply unit 10 is connected to the input terminal of the slide way monitoring unit 90 for providing a DC voltage to the slide way monitoring unit 90. The slide way monitoring unit 90 is configured to detect ladder slide way opening, and in response to the ladder slide way opening, output a one side slide way open signal T3 or a two side slide way open signal T4.

The slide way monitoring unit 90 comprises a one side slide way monitoring unit 901 and a two side slide way monitoring unit 902.

The one side slide way monitoring unit 901 comprises a first slide way monitoring input terminal 910, a first slide way monitoring output terminal 911, and a one side slide way monitoring switch 91. One end of the one side slide way monitoring switch 91 is connected to the first slide way monitoring input terminal 910, and the other end is connected to the first slide way monitoring output terminal 911 for outputting a one side ladder slide way open signal T3.

The two side slide way monitoring unit 902 comprises a second slide way monitoring input terminal 920, a third slide way monitoring output terminal 921, and a two side slide way monitoring switch 92. One end of the two side slide way monitoring switch 92 is connected to the second slide way monitoring input terminal 920, and the other end is connected to the third slide way monitoring output terminal 921 for outputting a two side ladder slide way open signal T4.

The one side slide way monitoring switch 91 and the two side slide way monitoring switch 92 are both double-contact switches. The second slide way monitoring output terminal 912 and the fourth slide way monitoring output terminal 922 have no external components connected to their output terminals.

The skirt panel monitoring unit 70 and the slide way monitoring unit 90 of this embodiment can fully ensure that the emergency evacuation device will not be accidentally opened, will not cause vehicle equipment to encroach upon limits, and can guarantee the safety of railway tracks while also ensuring the personal safety of occupants. Any movement of the skirt panel and the emergency evacuation device will be monitored, and at the same time, a prompt will be sent to the HMI display screen at the driver end, allowing the driver to take corresponding actions at any time based on the prompts.

This embodiment further provides a control method for an emergency evacuation device of a rail vehicle, applied to the working circuit of the emergency evacuation device described above. The control method comprises the following steps:

When the one side emergency evacuation device operates:
(1) A vehicle zero-speed signal K is obtained from the vehicle zero-speed signal input terminal 203. In response to the vehicle zero-speed signal K, the vehicle zero-speed response unit 20 outputs, through the first output terminal 202, the DC voltage provided by the power supply unit 10 input from the first input terminal 201, and the DC voltage is output to the skirt panel interactive unit 30. After the skirt panel deployment button 301 receives the voltage signal from the first voltage output terminal 311, it conducts and outputs the first voltage 31 to the first signal input terminal 501 of the door enable response unit 50. The first door enable signal input switch 51 selects the first one side to conduct, outputting the voltage signal input from the first signal input terminal 501 to the first signal output terminal 5011. The first signal output terminal 5011 is connected to the one side skirt panel opening cylinder solenoid valve 611, driving the one side skirt panel to open and exposing the one side ladder exit.
(2) In response to the vehicle zero-speed signal K, the DC voltage provided by the power supply unit 10 input from the first input terminal 201 is output through the first output terminal 202 to the folding ladder telescopic interactive unit 40. The ladder deployment button 401 receives the voltage signal from the third voltage output terminal 411, and the ladder deployment button 401 conducts and outputs the third voltage 41 to the third signal input terminal 503 of the door enable response unit 50. The third door enable signal input switch 53 selects the first one side to conduct, outputting the voltage signal input from the third signal input terminal 503 to the fifth signal output terminal 5031. The fifth signal output terminal 5031 is connected to the one side ladder deployment cylinder solenoid valve 631, driving the one side folding ladder to extend out from the ladder exit and open, allowing occupants to escape through the one side opened emergency evacuation channel.
(3) After evacuation is completed, when retracting the emergency evacuation device, the ladder retraction button 402 receives the voltage signal from the fourth voltage output terminal 412, and the ladder retraction button 402 conducts and outputs the fourth voltage 42 to the fourth signal input terminal 504 of the door enable response unit 50. The fourth door enable signal input switch 54 selects the first one side to conduct, outputting the voltage signal input from the fourth signal input terminal 504 to the seventh signal output terminal 5041. The seventh signal output terminal 5041 is connected to the one side ladder retraction cylinder solenoid valve 641, driving the one side folding ladder to retract from the ladder exit.
(4) The skirt panel retraction button 302 receives the voltage signal from the second voltage output terminal 312, and the skirt panel retraction button 302 conducts and outputs the second voltage 32 to the second signal input terminal 502 of the door enable response unit 50. The second door enable signal input switch 52 selects the first one side to conduct, outputting the voltage signal input from the second signal input terminal 502 to the third signal output terminal 5021. The third signal output terminal 5021 is connected to the one side skirt panel retraction cylinder solenoid valve 621, driving the one side skirt panel to retract and close the ladder exit.

When the two side emergency evacuation device operates:
1) A vehicle zero-speed signal K is obtained from the vehicle zero-speed signal input terminal 203. In response to the vehicle zero-speed signal K, the vehicle zero-speed response unit 20, through the first output terminal 202, outputs the DC voltage provided by the power supply unit 10 input from the first input terminal 201 to the skirt panel interactive unit 30. After the skirt panel deployment button 301 receives the voltage signal from the first voltage output terminal 311, it conducts and outputs the first voltage 31 to the first signal input terminal 501 of the door enable response unit 50. The first door enable signal input switch 51 selects the second two side to conduct, outputting the voltage signal input from the first signal input terminal 501 to the second signal output terminal 5012. The second signal output terminal 5012 is connected to the two side skirt panel opening cylinder solenoid valve 612, driving the two side skirt panel to open and exposing the two side ladder exit.
2) In response to the vehicle zero-speed signal K, the DC voltage provided by the power supply unit 10 input from the first input terminal 201 is output through the first output terminal 202 to the folding ladder telescopic interactive unit 40. The ladder deployment button 401 receives the voltage signal from the third voltage output terminal 411, and the ladder deployment button 401 conducts and outputs the third voltage 41 to the third signal input terminal 503 of the door enable response unit 50. The third door enable signal input switch 53 selects the second two side to conduct, outputting the voltage signal input from the third signal input terminal 503 to the sixth signal output terminal 5032. The sixth signal output terminal 5032 is connected to the two side ladder deployment cylinder solenoid valve 632, driving the two side folding ladder to extend out from the ladder exit and open, allowing occupants to escape through the two side opened emergency evacuation channel.
3) After evacuation is completed, when retracting the emergency evacuation device, the ladder retraction button 402 receives the voltage signal from the fourth voltage output terminal 412, and the ladder retraction button 402 conducts and outputs the fourth voltage 42 to the fourth signal input terminal 504 of the door enable response unit 50. The fourth door enable signal input switch 54 selects the second two side to conduct, outputting the voltage signal input from the fourth signal input terminal 504 to the eighth signal output terminal 5042. The eighth signal output terminal 5042 is connected to the two side ladder retraction cylinder solenoid valve 642, driving the two side folding ladder to retract from the ladder exit.
4) The skirt panel retraction button 302 receives the voltage signal from the second voltage output terminal 312, and the skirt panel retraction button 302 conducts and outputs the second voltage 32 to the second signal input terminal 502 of the door enable response unit 50. The second door enable signal input switch 52 selects the second two side to conduct, outputting the voltage signal input from the second signal input terminal 502 to the fourth signal output terminal 5022. The fourth signal output terminal 5022 is connected to the two side skirt panel retraction cylinder solenoid valve 622, driving the two side skirt panel to retract and close the ladder exit.

The above description provides a detailed introduction to the embodiments of the present invention. Specific examples are applied in this embodiment to illustrate the principles and implementation manners of the present invention. The description of the above embodiments is merely for helping to understand the method of the present invention and its core idea. Meanwhile, for those of ordinary skill in the art, based on the idea of the present invention, there will be changes in the specific implementation manners and application scope. In conclusion, the contents of this description should not be construed as limiting the present invention.

## Claims

1. A working circuit for an emergency evacuation device of a rail vehicle, **characterized by** comprising:
a power supply unit, a vehicle zero-speed response unit, a skirt panel interactive unit, a folding ladder telescopic interactive unit, a door enable response unit, and a drive response unit;
the power supply unit is connected to the vehicle zero-speed response unit and is configured to provide a DC voltage to the vehicle zero-speed response unit;
the vehicle zero-speed response unit is connected to the skirt panel interactive unit and the folding ladder telescopic interactive unit and is configured to output the DC voltage to the skirt panel interactive unit and the folding ladder telescopic interactive unit in response to a vehicle zero-speed signal;
the skirt panel interactive unit comprises a skirt panel deployment button or a skirt panel retraction button and is configured to output a first voltage to the door enable response unit in response to conduction of the skirt panel deployment button, and to output a second voltage to the door enable response unit in response to conduction of the skirt panel retraction button;
the folding ladder telescopic interactive unit comprises a ladder deployment button or a ladder retraction button and is configured to output a third voltage to the door enable response unit in response to conduction of the ladder deployment button, and to output a fourth voltage to the door enable response unit in response to conduction of the ladder retraction button;
an input terminal of the door enable response unit is connected to the skirt panel interactive unit and the folding ladder telescopic interactive unit, and an output terminal of the door enable response unit is connected to the drive response unit; the door enable response unit comprises a door enable signal input switch; and the drive response unit comprises a cylinder solenoid valve; and
the door enable response unit is configured to receive the first voltage, the second voltage, the third voltage, or the fourth voltage, and in combination with a one side or a two side selected by the door enable signal input switch, output a voltage signal to the drive response unit to drive the cylinder solenoid valve to operate.

2. The working circuit according to claim 1, wherein the vehicle zero-speed response unit comprises a vehicle zero-speed signal input terminal, a first input terminal, and a first output terminal; the vehicle zero-speed response unit is configured to output the DC voltage input from the first input terminal to the first output terminal in response to the vehicle zero-speed signal input from the vehicle zero-speed signal input terminal; the power supply unit is connected to the first input terminal of the vehicle zero-speed response unit and is configured to provide the DC voltage to the first input terminal of the vehicle zero-speed response unit.

3. The working circuit according to claim 2, wherein the skirt panel interactive unit comprises a first voltage input terminal, a first voltage output terminal, and a second voltage output terminal; the folding ladder telescopic interactive unit comprises a second voltage input terminal, a third voltage output terminal, and a fourth voltage output terminal; and
the first output terminal of the vehicle zero-speed response unit is connected to the first voltage input terminal of the skirt panel interactive unit and the second voltage input terminal of the folding ladder telescopic interactive unit; the first voltage output terminals, the second voltage output terminals, the third voltage output terminals, and the fourth voltage output terminals of the skirt panel interactive unit and the folding ladder telescopic interactive unit are all connected to the door enable response unit.

4. The working circuit according to claim 3, wherein the door enable response unit comprises a first door enable signal input switch, a second door enable signal input switch, a third door enable signal input switch, a fourth door enable signal input switch, a first signal input terminal, a second signal input terminal, a third signal input terminal, a fourth signal input terminal, a first signal output terminal, a second signal output terminal, a third signal output terminal, a fourth signal output terminal, a fifth signal output terminal, a sixth signal output terminal, a seventh signal output terminal, and an eighth signal output terminal; and
the door enable response unit, in response to the first door enable signal input switch conducting on the one side, outputs the voltage signal output from the first signal input terminal to the first signal output terminal; in response to the first door enable signal input switch conducting on the two side, outputs the voltage signal output from the first signal input terminal to the second signal output terminal; in response to the second door enable signal input switch conducting on the one side, outputs the voltage signal output from the second signal input terminal to the third signal output terminal; in response to the second door enable signal input switch conducting on the two side, outputs the voltage signal output from the second signal input terminal to the fourth signal output terminal; in response to the third door enable signal input switch conducting on the one side, outputs the voltage signal output from the third signal input terminal to the fifth signal output terminal; in response to the third door enable signal input switch conducting on the two side, outputs the voltage signal output from the third signal input terminal to the sixth signal output terminal; in response to the fourth door enable signal input switch conducting on the one side, outputs the voltage signal output from the fourth signal input terminal to the seventh signal output terminal; in response to the fourth door enable signal input switch conducting on the two side, outputs the voltage signal output from the fourth signal input terminal to the eighth signal output terminal.

5. The working circuit according to claim 4, wherein the drive response unit comprises a one side skirt panel opening cylinder solenoid valve, a two side skirt panel opening cylinder solenoid valve, a one side skirt panel retraction cylinder solenoid valve, a two side skirt panel retraction cylinder solenoid valve, a one side ladder opening cylinder solenoid valve, a two side ladder opening cylinder solenoid valve, a one side ladder retraction cylinder solenoid valve, and a two side ladder retraction cylinder solenoid valve; and
the first signal output terminal is connected to the one side skirt panel opening cylinder solenoid valve, the second signal output terminal is connected to the two side skirt panel opening cylinder solenoid valve, the third signal output terminal is connected to the one side skirt panel retraction cylinder solenoid valve, the fourth signal output terminal is connected to the two side skirt panel retraction cylinder solenoid valve, the fifth signal output terminal is connected to the one side ladder opening cylinder solenoid valve, the sixth signal output terminal is connected to the two side ladder opening cylinder solenoid valve, the seventh signal output terminal is connected to the one side ladder retraction cylinder solenoid valve, and the eighth signal output terminal is connected to the two side ladder retraction cylinder solenoid valve.

6. The working circuit according to claim 1, further comprising a skirt panel monitoring unit, wherein the power supply unit is connected to the skirt panel monitoring unit and is configured to provide the DC voltage to the skirt panel monitoring unit; and the skirt panel monitoring unit is configured to detect skirt panel opening, and in response to skirt panel opening, supply power to an emergency unit and output a skirt panel open signal.

7. The working circuit according to claim 6, wherein the skirt panel monitoring unit comprises a one side skirt panel monitoring unit and a two side skirt panel monitoring unit;
the one side skirt panel monitoring unit comprises a first skirt panel monitoring input terminal, a first skirt panel monitoring output terminal, a second skirt panel monitoring output terminal, and a one side skirt panel monitoring switch; the first skirt panel monitoring input terminal is connected to the one side skirt panel monitoring switch, the one side skirt panel monitoring switch is a double-contact switch comprising a normally closed contact and a normally open contact, the normally closed contact is connected to the first skirt panel monitoring output terminal, and the first skirt panel monitoring output terminal is configured to output a skirt panel open signal; and the normally open contact is connected to the second skirt panel monitoring output terminal, and the second skirt panel monitoring output terminal is connected to the emergency unit and is configured to supply power to the emergency unit; and
the two side skirt panel monitoring unit comprises a second skirt panel monitoring input terminal, a third skirt panel monitoring output terminal, a fourth skirt panel monitoring output terminal, and a two side skirt panel monitoring switch; the second skirt panel monitoring input terminal is connected to the two side skirt panel monitoring switch, the two side skirt panel monitoring switch is a double-contact switch comprising a normally closed contact and a normally open contact, the normally closed contact is connected to the third skirt panel monitoring output terminal, and the third skirt panel monitoring output terminal is configured to output a skirt panel open signal; and the normally open contact is connected to the fourth skirt panel monitoring output terminal, and the fourth skirt panel monitoring output terminal is connected to the emergency unit and is configured to supply power to the emergency unit.

8. The working circuit according to claim 1, further comprising a slide way monitoring unit, wherein the power supply unit is connected to the slide way monitoring unit and is configured to provide the DC voltage to the slide way monitoring unit; and the slide way monitoring unit is configured to detect slide way opening and output a slide way open signal in response to the slide way opening.

9. The working circuit according to claim 8, wherein the slide way monitoring unit comprises a one side slide way monitoring unit and a two side slide way monitoring unit;
the one side slide way monitoring unit comprises a first slide way monitoring input terminal, a first slide way monitoring output terminal, and a one side slide way monitoring switch; one end of the one side slide way monitoring switch is connected to the first slide way monitoring input terminal, and the other end of the one side slide way monitoring switch is connected to the first slide way monitoring output terminal; and
the two side slide way monitoring unit comprises a second slide way monitoring input terminal, a second slide way monitoring output terminal, and a two side slide way monitoring switch; one end of the two side slide way monitoring switch is connected to the second slide way monitoring input terminal, and the other end of the two side slide way monitoring switch is connected to the second slide way monitoring output terminal.

10. A control method for an emergency evacuation device of a rail vehicle, for use with the working circuit for an emergency evacuation device of a rail vehicle according to any one of claims 1-9, **characterized by** comprising following steps:
obtaining a vehicle zero-speed signal, wherein a vehicle zero-speed response unit outputs a DC voltage input from a first input terminal through a first output terminal to a first voltage input terminal of a skirt panel interactive unit in response to the vehicle zero-speed signal; outputting, by the skirt panel interactive unit, the first voltage to the first signal input terminal of the door enable response unit in response to conduction of a skirt panel deployment button; in response to the door enable signal input switch selecting the one side or the two side, outputting a voltage signal from a first signal output terminal or a second signal output terminal to a drive response unit, so as to drive the one side or two side skirt panel opening cylinder solenoid valves for operating, and opening the one side or two side skirt panels;
outputting, in response to the vehicle zero-speed signal, the DC voltage input from the first input terminal through the first output terminal to the second voltage input terminal of a folding ladder telescopic interactive unit; in response to conduction of a ladder deployment button, outputting, by the folding ladder telescopic interactive unit, a third voltage to a third signal input terminal of the door enable response unit; in response to the third door enable signal input switch selecting the one side or the two side, outputting the voltage signal from a fifth signal output terminal or a sixth signal output terminal to the drive response unit, so as to drive the one side or two side ladder opening cylinder solenoid valves for operating, and extending and opening the one side or two side folding ladders;
outputting, by the folding ladder telescopic interactive unit, the fourth voltage to the fourth signal input terminal of the door enable response unit in response to conduction of the ladder retraction button; in response to the fourth door enable signal input switch selecting the one side or the two side, outputting the voltage signal from the seventh signal output terminal or the eighth signal output terminal to the drive response unit, so as to drive the one side or two side ladder retraction cylinder solenoid valves for operating, and folding and retracting the one side or two side folding ladders; and
outputting, by the skirt panel interactive unit, the second voltage to the second signal input terminal of the door enable response unit in response to conduction of the skirt panel retraction button; in response to the second door enable signal input switch selecting the one side or the two side, outputting the voltage signal from the third signal output terminal or the fourth signal output terminal to the drive response unit, so as to drive the one side or two side skirt panel retraction cylinder solenoid valves to operate, and retracting the one side or two side skirt panels.
